# DEMANDE DE BREVET EUROPEEN

(11) **EP 0 537 052 A1**
(43) Date de publication de la demande: **14.04.1993**
(21) Numéro de dépôt: 92402674.3
(22) Date de dépôt: 29.09.1992
(51) Int. Cl.: F16K 7/10

(54) **Dispositif d'obturation d'une canalisation véhiculant un fluide**

(30) Priorité: 09.10.1991 FR 9112432
(71) Demandeur: GAZ DE FRANCE (SERVICE NATIONAL), F-75017 Paris (FR)
(72) Inventeur: Wartel, Christian, F-75020 Paris (FR); Le Testu, Patrick, F-92210 Saint-Cloud (FR)
(74) Mandataire: Lerner, François

(57) **Abrégé**

Il s'agit d'un dispositif d'obturation comprenant un ballon d'obturation (3) et,pour améliorer l'étanchéité de cette obturation, au moins une poche (11) extérieure expansible sous l'action d'un produit de remplissage, cette poche étant disposée autour d'une partie au moins du ballon à laquelle elle est de préférence liée. Le ballon peut comprendre une housse extérieure (5) contenant une vessie gonflable (7).

Application à l'obturation des conduites de gaz en charge, notamment.

## Description

L'invention concerne un dispositif d'obturation d'une canalisation, et notamment d'une canalisation de gaz.

Le domaine technique concerné par la présente invention est donc relatif à l'obturation provisoire des conduites véhiculant d'une façon générale un fluide (liquide ou gazeux), par introduction dans ladite conduite d'un élément obturant, ceci au moyen d'un outillage spécifique.

Pour obturer provisoirement une canalisation "en charge" (c'est-à-dire dans laquelle circule le fluide), les moyens habituellement mis en oeuvre consistent à réaliser une fouille ou tranchée plus ou moins importante jusqu'à mettre à jour totalement la conduite, à fixer ensuite sur cette dernière un apparail formant sas permettant le perçage de la canalisation pour y introduire l'élément obturant,ceci en évitant tout dégagement (trop important) de fluide. On comprend que dans le cas d'une conduite de gaz, cette dernière exigence est particulièrement importante.

En règle générale, la fixation sur la conduite de l'appareil formant sas peut être obtenue soit par bridage ou dépression, soit par soudage.

Le type d'obturateur utilisé le plus fréquemment consiste en un ballon d'obturation.

Toutefois, les techniques jusqu'à présent employées ne se sont pas avérées toujours satisfaisantes au niveau de l'étanchéité obtenue une fois l'élément obturant en position dans la conduite, les imperfections de surface de cette dernière favorisant assez régulièrement un débit de fuite plus ou moins important pouvant s'avérer néfaste, voire dangereux.

L'invention a donc pour objet notamment d'éviter ce type de problème en proposant un élément d'obturation qui permet d'obturer intérieurement aussi complètement que possible les canalisations en charge, en faisant tendre le débit de fuite vers une valeur quasi nulle.

Dans ce but, le dispositif d'obturation de l'invention se caractérise en ce qu'il comprend, outre un ballon d'obturation, au moins une poche extérieure expansible sous l'action d'un produit de remplissage, cette poche étant disposée autour d'une partie au moins dudit ballon, pour améliorer l'étanchéité de l'obturation.

Ainsi, de par la présence de cette (ou de ces) poche(s) interposée(s) entre le ballon d'obturation et la paroi intérieure en regard de la canalisation à obturer, on va pouvoir, en particulier en remplissant de façon convenable la(les) poche(s), combler les éventuels interstices par lesquels jusqu'à présent le fluide de la canalisation pouvait encore s'écouler.

De préférence, cette poche extérieure d'étanchéité sera reliée à la paroi extérieure de limitation du ballon.

Quant à ce ballon d'obturation, il pourra comprendre une vessie intérieure gonflable et une enveloppe extérieure souple en forme de ballon dans laquelle pourra être contenue la vessie (celle-ci occupant généralement à l'état gonflé sensiblement tout le volume de ce ballon), la poche expansible d'étanchéité entourant la paroi de délimitation de l'enveloppe extérieure à laquelle elle sera donc de préférence liée.

En pratique, pour un maximum d'efficacité, on préfèrera disposer la(ou les) poche(s) d'étanchéité au moins au niveau de la partie la plus renflée du ballon.

Dans une première variante de réalisation, le produit de remplissage de cette poche pourra être un produit d'étanchéité aux fluides liquides ou gazeux, tel qu'une graisse.

Dans ce cas, on pourra préférer réaliser la paroi de délimitation extérieure de la(des) poche(s) en une matière poreuse permettant à une partie au moins du produit de remplissage contenu dans cette poche d'en traverser la paroi lorsque, dans un état expansé de la poche, le produit de remplissage exercera une pression contre sa paroi, favorisant ainsi, lorsque le dispositif sera placé dans la canalisation, la présence d'une couche de produit entre ladite poche et la paroi intérieure en regard de la canalisation.

Dans une autre variante de réalisation, on pourrait toutefois prévoir par exemple de réaliser la(ou l'une des) poche(s) en une matière étanche et prévoir alors d'utiliser, en tant que produit de remplissage de cette poche, un fluide liquide ou gazeux.

Dans l'invention, il a également été envisagé la possibilité que le dispositif comprenne plusieurs telles poches d'étanchéité expansibles s'étendant annulairement autour de l'enveloppe du ballon, ceci transversalement à l'axe longitudinal de l'enveloppe (lequel axe est sensiblement confondu avec celui de la canalisation lorsque le dispositif est installé et remplit sa fonction d'obturation).

A partir des dessins annexés donnés uniquement à titre d'exemple, on va maintenant décrire plus en détail quelques modes possibles de réalisation de l'invention.

Dans les dessins :
- la figure 1 présente schématiquement une coupe transversale longitudinale d'une forme possible de réalisation du dispositif de l'invention,
- la figure 2 est une vue extérieure dans le sens de la flèche II de la figure 1,
- la figure 3 présente le dispositif de la figure 1 remplissant sa fonction d'obturation à l'intérieur d'une canalisation en charge,
- la figure 4 est une vue de détail du repère IV de la figure 3 ;
- et la figure 5 est, selon une vue identique à celle de la figure 1, une représentation schématique d'une variante de réalisation.

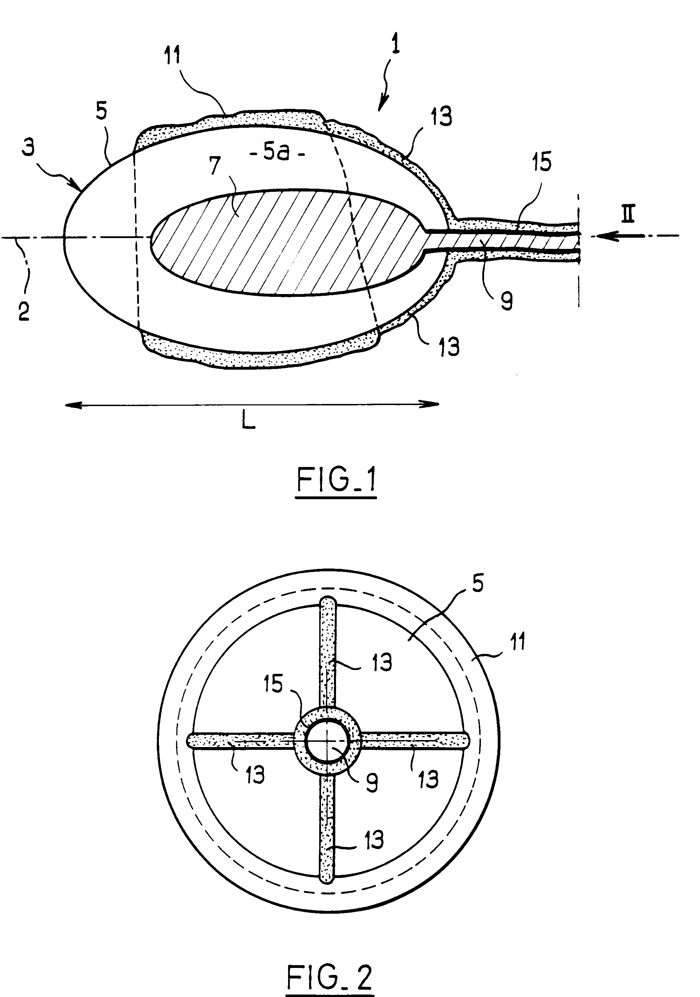

Sur la figure 1 tout d'abord, on voit donc illustré un type d'obturateur susceptible d'être utilisé pour obturer une canalisation, telle qu'une canalisation de gaz.

L'obturateur 1 représenté est essentiellement constitué d'un ballon d'obturation repéré dans son ensemble 3 composé en l'espèce d'une enveloppe extérieure ou housse 5 en forme de ballon par exemple sensiblement ovale, et d'une vessie intérieure gonflable 7 habituellement dimensionnée pour occuper dans son état gonflé sensiblement tout le volume intérieur 5a de l'enveloppe 5, laquelle peut notamment être réalisée en une matière poreuse souple et peu extensible telle qu'une matière caoutchouteuse.

La vessie intérieure gonflable 7 sera de préférence fabriquée en matière plastique élastique, normalement étanche aux gaz. Son gonflage, par un fluide de gonflage habituellement gazeux, est ici assuré via un conduit d'alimentation 9 qui traverse localement la paroi de l'enveloppe 5 pour se raccorder à une réserve de fluide et à un moyen de gonflage (non représentés).

Conformément à l'invention, autour de l'enveloppe 5 est disposée une poche 11 destinée à améliorer les conditions d'étanchéité entre le dispositif d'obturation 1 (et notamment son enveloppe) et la paroi de la canalisation à l'intérieur de laquelle ce dispositif doit être placé.

Sur la figure 1, on remarquera que la poche 11, qui est une poche expansible ou déformable sous l'action (ou sous la pression) d'un produit de remplissage, forme ici une pièce unique à la manière d'un manchon venant entourer la housse 5 sur une partie de sa longueur L.

En pratique, il sera conseillé de fixer par tout moyen adapté (collage, soudage....) la paroi limitatrice de la poche 11 à celle de la housse 5 qu'elle entoure.

Pour une bonne efficacité du dispositif, la poche 11 entourera de préférence, sur la portion considérée, toute la périphérie de la housse sur sa partie centrale la plus renflée, sensiblement coaxialement à l'axe 2 du ballon, ainsi que cela est représenté sur la figure 1.

Pour son remplissage, la poche 11 sera reliée à un ou plusieurs conduits d'alimentation en produit de remplissage.

Comme on le voit plus clairement sur la figure 2, on pourra en particulier prévoir, pour une bonne répartition de ce produit, plusieurs veines d'alimentation 13 (par exemple quatre veines disposées en croix) raccordées d'un côté à ladite poche et de l'autre à un conduit général d'alimentation 15 pouvant par exemple s'étendre coaxialement autour du conduit 9.

Bien entendu, les conduits d'alimentation 9, 15 et les veines intermédiaires 13 seront de préférence réalisées en une matière souple (par exemple une matière plastique ou caoutchouteuse) ne se laissant pas traverser par les produits ou fluides à transporter, le conduit 15 étant, à l'image du conduit 9, relié en amont à un moyen d'injection approprié et à une réserve de produit de remplissage (non représentés).

Dans la pratique, le produit de remplissage de la poche 11 pourra être de différents types.

Tout d'abord, on pourra prévoir un fluide liquide ou gazeux (eau, air...).

Dans ce cas, la matière constituant la poche sera de préférence étanche respectivement soit aux liquides, soit aux gaz.

Mais il pourra également s'avérer intéressant d'utiliser en tant que produit de remplissage une matière visqueuse ou pâteuse habituellement employée pour l'étanchéité, telle qu'une graisse.

C'est d'ailleurs en particulier avec ce type de matière que l'utilisation de plusieurs veines intermédiaires 13 sera intéressante afin de répartir favorablement et rapidement le produit dans l'ensemble de la poche.

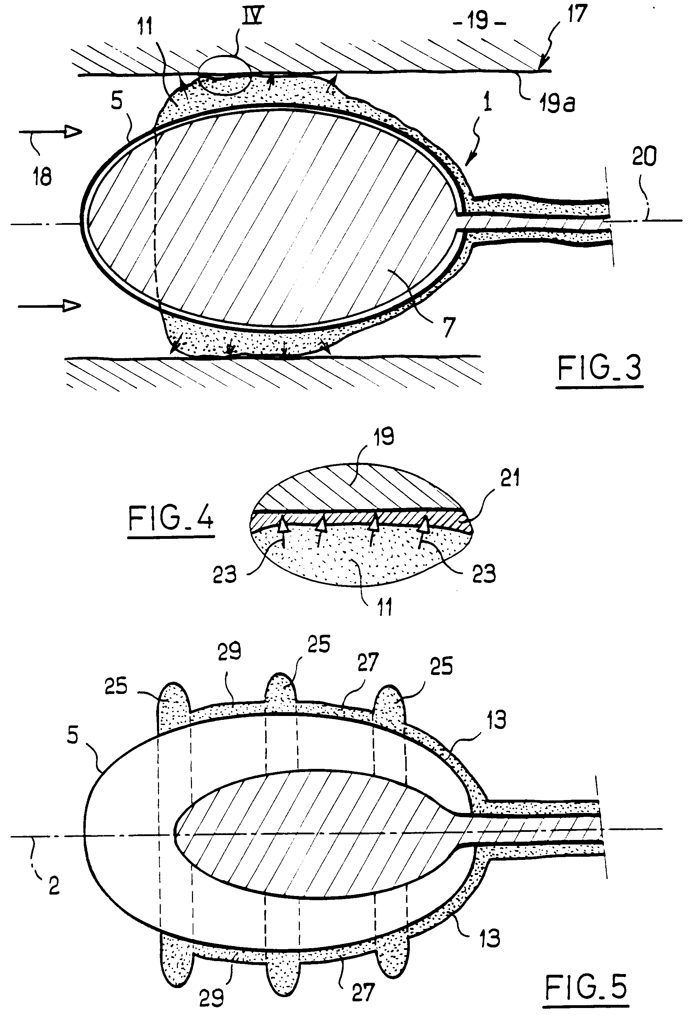

Avec un tel produit, il pourra par ailleurs s'avérer intéressant d'utiliser, pour la matière de la poche, un matériau poreux, c'est-à-dire un matériau se laissant plus ou moins traverser par ce produit de remplissage visqueux ou pâteux afin, comme on va le voir ci-après en référence à la figure 3, de pouvoir constituer une sorte de couche d'étanchéité entre la poche et la paroi intérieure en regard de la canalisation où doit être disposé le ballon.

Sur cette figure 3, le dispositif d'obturation 1 a été représenté en situation active, tel qu'il est lorsqu'il remplit sa fonction d'obturation totale, ou quasi totale, d'une canalisation 17, en empêchant pratiquement tout écoulement possible de fluide alors que cette canalisation est en charge, le flux de fluide ayant été schématisé par les flèches 18.

A titre purement informatif, on notera que la mise en place d'un tel dispositif s'effectuera de façon très aisée, la vessie 7 étant alors dans son état dégonflé, de même que la poche 11, la housse 5 pouvant être aisément pliée de manière que l'ensemble puisse passer à travers un orifice transversal que l'on aura préalablement ménagé en un endroit approprié de la canalisation, à travers sa paroi 19.

A partir de cette figure 3, mais également de la figure 4, on pourra constater qu'en position active du dispositif, la poche 11 est dans son état expansé et vient au contact (ou presque au contact) de la surface intérieure en regard 19a de la canalisation, la majeure partie du volume intérieur de cette dernière étant toutefois occupée par la housse 5 maintenue en forme de ballon plus ou moins ovale ou rond par la vessie intérieure 7 alors pleinement gonflée.

Sur la figure 4, on notera toutefois qu'il peut en certains endroits rester un espace 21 entre la paroi de la poche et la paroi en regard de la canalisation, compte tenu des irrégularités de surface, de reste de bavures ou par exemple de l'encrassage de la conduite.

Si la paroi de la poche est réalisée en une matière poreuse se laissant plus ou moins traverser par son produit de remplissage, alors celui-ci pourra s'infiltrer dans l'espace intermédiaire 21 et constituer là une sorte de joint complémentaire d'étanchéité, sa nature visqueuse ou pâteuse évitant qu'il s'écoule particulièrement dans la conduite ou se disperse.

Sur la figure 4, on a voulu représenter cet effet par les flèches 23 que l'on retrouve, sans repère, sur la figure 3.

On notera que, même si la poche 11 n'est pas constituée en une matière poreuse associée à un tel produit d'étanchéité, les essais déjà réalisés ont montré qu'avec une poche étanche et une pression de remplissage convenable on obtenait malgré tout de bonnes conditions d'obturation.

Intéressons-nous maintenant à la figure 5 pour voir représentée une variante de réalisation de ce dispositif d'obturation, variante qui se différencie essentiellement du mode de réalisation précédent en ce qu'au lieu d'une poche 11 unique, on trouve là plusieurs poches annulaires 25 formant une fois "gonflées" une série de bourrelets à la surface de la même housse 5, ces bourrelets annulaires s'étendant transversalement (par exemple perpendiculairement) à l'axe général 2 du ballon, c'est-à-dire, une fois ce dernier installé, transversalement à l'axe 20 de la canalisation (voir figure 3).

Ainsi, si l'on prévoit par exemple comme illustré trois bourrelets 25 répartis sur la partie la plus renflée de la housse 5, on pourra constituer trois barrières successives d'étanchéité à l'écoulement du flux de fluide 18.

Pour leur alimentation en produit de remplissage, les poches annulaires d'étanchéité 25 seront de préférence réunies les unes aux autres par des prolongements des veines intermédiaires 13, à l'image des prolongements successifs 27 et 29 de la figure 5.

Quant à la matière constitutive de ces bourrelets, elle pourra être comme précédemment choisie dans un matériau étanche aux fluides ou aux gaz, ou en un matériau poreux favorisant la constitution de la couche d'étanchéité intermédiaire 21 de la figure 4.

## Revendications

**1. -** Dispositif d'obturation d'une canalisation, comprenant :
- une vessie (7) gonflable sous l'action d'un fluide de gonflage, ladite vessie étant raccordée à un premier conduit (9) adapté pour transporter depuis, ou vers, elle son dit fluide de gonflage,
- une enveloppe souple (5) entourant la vessie et présentant une forme sensiblement ovale ou en ballon lorsque la vessie (7) est dans son état gonflé, ladite enveloppe étant localement traversée par ledit premier conduit (9) relié à la vessie,
caractérisé en ce qu'il comprend en outre :
- au moins une poche extérieure (11, 25) expansible sous l'action d'un produit de remplissage pour venir, dans son état expansé et dans l'état gonflé de la vessie (7), sensiblement au contact de la paroi intérieure (19a) de la canalisation à obturer, ladite poche qui entoure au moins partiellement ladite enveloppe souple (5) étant raccordée à au moins un second conduit (13, 15, 27, 29) adapté pour transporter depuis, ou vers, cette dite poche son dit produit de remplissage.

**2 -** Dispositif selon la revendication 1 caractérisé en ce que ladite enveloppe (5) présente une paroi qui la limite extérieurement et à laquelle est fixée ladite poche.

**3. -** Dispositif selon l'une quelconque des revendications précédentes caractérisé en ce que la poche expansible (11, 25) s'étend tout autour de la partie la plus renflée de l'enveloppe.

**4. -** Dispositif selon l'une quelconque des revendications précédentes caractérisé en ce que le produit de remplissage de la poche (11, 25) est un produit pâteux ou visqueux, utilisé comme produit d'étanchéité pour les fluides liquides ou gazeux, tel qu'une graisse.

**5. -** Dispositif selon l'une quelconque des revendications précédentes caractérisé en ce que la poche (11, 25) est délimitée extérieurement par une paroi réalisée en une matière poreuse permettant à une partie du produit de remplissage contenu dans cette poche d'en traverser la paroi lorsque ledit produit de remplissage exerce une pression contre cette paroi, de manière, une fois le dispositif disposé dans la canalisation (17), à favoriser la présence d'une couche (21) d'étanchéité à base d'un tel produit entre ladite poche (11, 25) et la paroi intérieure en regard (19a) de cette canalisation.

**6. -** Dispositif selon l'une quelconque des revendications 1 à 4 caractérisé en ce que la poche expansible (11, 25) est réalisée en une matière étanche au produit qui la remplit.

**7. -** Dispositif selon la revendication 6 caractérisé en ce que le produit de remplissage de la poche est un fluide liquide ou gazeux dont la pression est adaptée pour appliquer de façon étanche la poche contre la paroi (19a) de la canalisation.

**8. -** Dispositif selon l'une quelconque des revendications précédentes caractérisé en ce que ladite enveloppe souple (5) est réalisée en matière caoutchouteuse, peu extensible.

**9. -** Dispositif selon l'une quelconque des revendications précédentes caractérisé en ce que la vessie (7) est gonflable par un fluide qui est différent du produit de remplissage de la poche expansible (11, 25).

**10. -** Dispositif selon l'une quelconque des revendications précédentes caractérisé en ce qu'il comprend une dite poche extérieure expansible unique (11) s'étendant exclusivement autour de la partie la plus renflée de l'enveloppe et sur toute la périphérie de cette dernière.

**11. -** Dispositif selon la revendication 10 caractérisé en ce que ledit second conduit (13, 15) de transport du produit de remplissage de la poche extérieure (11) comprend :
- un conduit général (15) s'étendant autour dudit premier conduit (19) de transport du fluide de gonflage de la vessie, ceci juqu'à proximité du raccordement à cette vessie dudit premier conduit (9),
- et plusieurs veines de répartition (13) s'étendant autour de l'enveloppe (5), entre ledit conduit général (15) et ladite poche (11).

**12. -** Dispositif selon l'une quelconque des revendications 1 à 9 caractérisé en ce qu'il comprend plusieurs poches extérieures expansibles (25) formant des bourrelets s'étendant sensiblement annulairement autour de ladite enveloppe souple (5), chacune desdites poches étant raccordée audit second conduit (27, 29, 13, 15) de transport du produit de remplissage.

**13. -** Dispositif selon la revendication 12 caractérisé en ce que ledit second conduit (13, 15, 27, 29) de transport du produit de remplissage de la poche extérieure (11) comprend :
- un conduit général (15) s'étendant autour dudit premier conduit (19) de transport du fluide de gonflage de la vessie, ceci juqu'à proximité du raccordement à cette vessie dudit premier conduit (9),
- et plusieurs veines de répartition (13) s'étendant autour de l'enveloppe (5), d'une part entre ledit conduit général (15) et la plus proche desdites poches (25) et, d'autre part, entre lesdites poches entre elles.
